# EUROPEAN PATENT SPECIFICATION

(11) **EP 3 173 888 B1**
(45) Date of publication and mention of the grant of the patent: **21.08.2019**
(21) Application number: 14892222.2
(22) Date of filing: 29.08.2014
(51) Int. Cl.: G05B 19/042, G05B 15/02, G08C 17/02

(54) **METHOD FOR MANAGING HOUSEHOLD DEVICES**
VERFAHREN ZUR VERWALTUNG VON HAUSHALTSVORRICHTUNGEN
PROCÉDÉ POUR ADMINISTRER DES DISPOSITIFS MÉNAGERS

(30) Priority: 21.07.2014 CN 201410348117
(43) Date of publication of application: 31.05.2017
(73) Proprietor: Huizhou TCL Mobile Communication Co., Ltd., Hui Zhou Guangdong 516006 (CN)
(72) Inventor: QIAN, Wen, Huizhou Guangdong 516006 (CN); QIAO, Hongwei, Huizhou Guangdong 516006 (CN)
(74) Representative: ZHAOffice SPRL
(86) International application number: PCT/CN2014/085550
(87) International publication number: WO 2016/011698

(56) References cited:
- WO-A1-2008/091433
- CN-A- 102 075 860
- CN-A- 103 529 774
- US-A1- 2004 121 725
- US-A1- 2010 088 361

## Description

### FIELD OF THE DISCLOSURE

The present disclosure relates to the field of smart home, and more particularly, to a method for managing household devices.

### BACKGROUND OF THE DISCLOURE

Nowadays, when mentioning smart home, the "internet of things" will come to mind. Concept of "internet of things" is that every thing being connected with each other. A wireless communication module based on ZigBee technology communicates with various control modules in a house in order to control the switch of lights and sockets, provide door lock control and associated automated fortification and release control, thus achieving appliances control with infra-red or Bluetooth remote control functionalities; or the wireless communication module can be connected to a public telephone wire, so as to realize remote control of phone calls. These application scenarios, however, all belong to direct communication and monitor limited among "things", which is not considerate.

Currently, solutions for realizing the smart home can be roughly divided into the following categories: (1) Wired communication may be used among the household devices. However, extra wiring would be needed with complex arrangements. (2) Infra-red or NFC control may be used. Yet, Infra-red or NFC control may have many limitations. For example, short transmission distance, and communication devices need to be directly faced with each other for actualizing signal transmission. (3) 802.11 wireless LAN may be used. The transmission distance is increased, but related chips are relatively expensive.

WO 2008/091433a1 discloses a system, device and method for wirelessly controlling a plurality of electronic appliances arranged within a local area. The system includes an electronic device having a location detection circuit, a user interface circuit and a display device. The location detection circuit is operative to determine a general location of the electronic device within the local area, and the user interface circuit is operative to receive the determined general location. Based thereon, the user interface circuit configures at least one user interface for control of at least one electronic appliance located in the same general location as the electronic device. The display device may display the user interface configured by the user interface circuit.

US2004/0121725A1 discloses a remote control device. The device controls any of a plurality of apparatuses by transmitting a remote control signal for controlling a target apparatus in response to a user operation, detects a position of the remote control device and generates self-position information indicating the position, and specifies one of the apparatuses that is the closest in distance from the remote control device, as the target apparatus, based on the generated self-position information and a determined criterion. When the remote control device detects a user operation, the remote control device transmits a remote control signal corresponding to the detected user operation.

### SUMMARY OF THE DISCLOSURE

A method for managing household devices is provided by the present disclosure in order to address the aforementioned deficiencies existed in the prior art.

In order to solve the above-mentioned problem, a technical solution adopted by the present disclosure is to provide a method for managing household devices using a mobile terminal. The method include locating by the household devices current position coordinates of the mobile terminal with wireless gateway function; computing by the household devices their respective distances to the mobile terminal using the current position coordinates of the mobile terminal to acquire a plurality of pieces of distance information, and transmitting the plurality of pieces of distance information to a control center; selecting by the control center the smallest distance based on the plurality of pieces of distance information, and transmitting feedback information to the household device at the smallest distance; receiving by the household device at the smallest distance the feedback information; setting a signal strength threshold for the operation to be performed by the household device; comparing the signal strength of the feedback information against the signal strength threshold for the operation to be performed; when the signal strength of the feedback information is greater than or equal to the signal strength threshold for the operation to be performed, performing by the house hold device one of the operations of turning on, turning off or regulating.

Beneficial effects of the present disclosure are as below: differing from the prior art, the household devices in the present disclosure interact with the mobile terminal and determine the location of the mobile terminal, and a control center is configured to activate the corresponding operation mode of the household devices, whereby the household devices can be intelligently regulated according to actions and motions of the human, thus achieving an intelligent and humane home management mode and greatly facilitating people's everyday life. Furthermore, wireless interaction is enabled in the present disclosure. Hence, no wiring would be needed, and the household devices wouldn't need to be directly faced with each other for signal transmission, and no additional chips are added, making possible convenient and easy operations with low cost.

### BRIEF DESCRIPTION OF THE DRAWINGS

FIG. 1 is a flow chart illustrating the method for managing household devices according to a first embodiment of the present disclosure.
FIG. 2 is a flow chart illustrating the method for managing household devices according to a second embodiment of the present disclosure.
FIG. 3 is a schematic diagram of a system for managing household devices according to a third embodiment of the present disclosure.

### DETAILED DESCRIPTION OF THE DISCLOSURE

Below a definite and complete description will be made on technical solutions provided by embodiments of the present disclosure with reference to the accompanying drawings of embodiments of the present disclosure. Apparently, the described embodiments are merely some of but not all of the embodiments of the present disclosure. Based on the embodiments of the present disclosure, all other embodiments obtained by one of ordinary skill in the art without making inventive effort shall fall within the protection scope of the present disclosure.

The household devices entailed in the present disclosure are generally household devices or appliances in everyday life, for example, a light, a television, a socket, a refrigerator, a washing machine, doors and windows, or any other electric equipments; while the mobile terminal may be a mobile phone, a tablet computer, or a MP3/MP4, a headphone and the like electronic devices that are enabled with wireless gateway functionality.

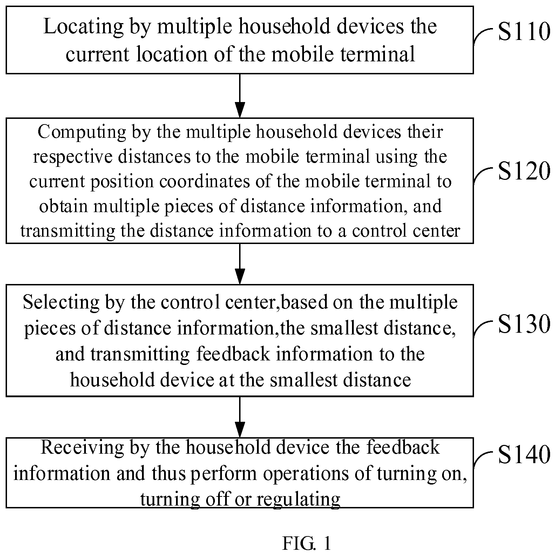

Referring now to FIG. 1, a flow chart illustrating the method for managing household devices according to a first embodiment of the present disclosure, the method comprises:
Step S110: Locating by multiple household devices the current location of the mobile terminal.

Residence of every family may be furnished with multiple household devices having various functions that are distributed among the bedroom, the hall, the kitchen or even outside the residence. When a mobile terminal enters a room or a fixed space, household devices in the room or in the fixed space may locate the mobile terminal in order to acquire the current location of the mobile terminal. Since the mobile terminal is carried on the user, the household devices also, indirectly, locate the position of the user.

Step S120: Computing by the multiple household devices their respective distances to the mobile terminal using the current position coordinates of the mobile terminal to obtain multiple pieces of distance information, and transmitting the multiple pieces of distance information to a control center.

Any household devices within the room or the fixed space may locate the mobile terminal. Since the multiple household devices may be distributed among various locations, the distances from the various locations to the mobile terminal may be different respectively. And when the user moves, position of the mobile terminal carried on the user may also vary. Thus, the multiple household devices may need to, after locating the mobile terminal, compute their respective distances to the mobile terminal in order to obtain multiple pieces of distance information, and transmit the distance information to a control center.

Step S130: Selecting by the control center the smallest distance according to the multiple pieces of distance information, and transmitting feedback information to the household device at the smallest distance.

The control center may receive the distance information transmitted from the various household devices, and select the smallest distance therein and transmit feedback information to the household device that is closest to the mobile terminal.

Step S140: Receiving by the household device at the smallest distance the feedback information and thus performing operations of turning on, turning off, or regulating.

The household device closest to the mobile terminal may, after receiving the feedback information, perform the operations of turning on, turning off, or regulating. For example, an air conditioner may, after receiving the feedback information, be switched on or switched off; or select other modes, for example, select a cooling or heating mode in order to regulate the temperature correspondingly. Preferably, the mobile terminal may customize an operation mode on the household device. As such, when the household device interacts with the mobile terminal and acquires the feedback information, it may perform operations according to the customized mode. As in summer, the air conditioner may be turned on and may regulate the temperature to the customized temperature; or the mobile terminal may set a barometer index, thus, when it is sunny, the washing machine may automatically do the washing.

Differing from the prior art, the household device in the first embodiment of the present disclosure can interact with the mobile terminal and thus determine the location of the mobile terminal, and a control center is further configured to activate the corresponding operation mode of the household device, thus realizing an intelligent home management manner.

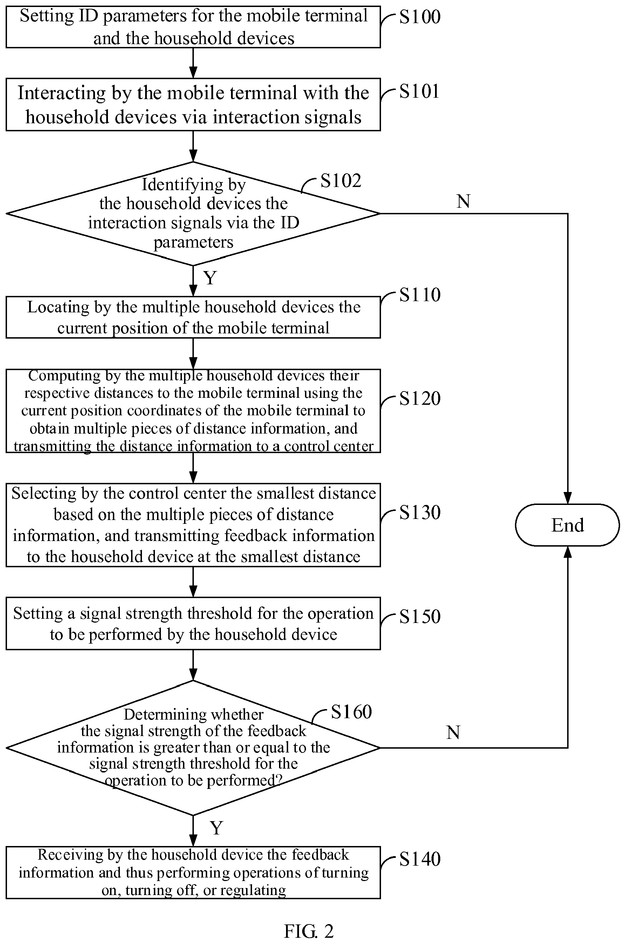

Referring now to FIG. 2, a flow chart illustrating the method for managing household devices according to a second embodiment of the present disclosure.

Compared with the method for managing household devices according to the first embodiment of the present disclosure, the second embodiment, differing in that it further comprises, before the step S110:
Step S100: Set ID parameters for the mobile terminal and the household devices.

The ID parameters are configured to identify interaction signals between the mobile terminal and the household devices. Since a user may carry multiple mobile terminals, and the mobile terminals used by different users may also be different. In addition, different users may inevitably have diverse operational requirements for the household devices. Hence, it is necessary for the household devices to identify the mobile terminal so as to effectuate the function of authentication. As such, the household devices may perform different operations corresponding to different users or different mobile terminals, thereby achieving a humane management mode.

The method may further include, before the step S110:
Step S101: Interacting by the mobile terminal with the household devices via the interaction signals;
Step S102: Identifying the interaction signals by the household devices via the ID parameters;

Specifically, the mobile terminal according to the second embodiment of the present disclosure is enabled with wireless gateway function, and can send out signals and thus form a signal coverage area. With regard to the household devices, apparatuses with wireless gateway function may also be deployed therein. For example, a Bluetooth beacon base station, an NFC chip or an infra-red device may be configured on the household device to realize the interaction with the mobile terminal. At present, household devices available on the market, especially appliances, are all equipped with remote control sensors having wireless gateway function. When the mobile terminal interacts with the household devices, the mobile terminal can be located. Interaction mentioned above may be interpreted as either the mobile terminal searches for the signals transmitted by the household device, or the household device searches for the signals transmitted by the mobile terminal. As long as one is within the signal coverage area of the other and spots the signals transmitted by the other, the interaction can be achieved.

If the identification passes, then going to step S110. Namely, the current position coordinates of the mobile terminal are successfully located; or, if the identification fails, then the current position coordinates of the mobile terminal are not located.

Preferably, computation of the distances using the current position coordinates of the mobile terminal can be accomplished by determination of strength of the interaction signals. More particularly, the stronger the interaction signal is, the closer the corresponding household device and the mobile terminal are with each other; the weaker the interaction signal, the farther the corresponding household device and the mobile terminal are with each other.

Preferably, the method further comprises, before receiving by the household device the feedback information and thus performing the operations of turning on, turning off or regulating:
Step S150: Setting a signal strength threshold for the operation to be performed by the household device;
Step S160: Determining whether the signal strength of the feedback information is greater than or equal to the signal strength threshold for the operation to be performed.

Generally, if the mobile terminal is still far away from the nearest household device, namely, the user is far away from the nearest household device, then the user generally won't be inclined to operate the household device. Thus, it is necessary to set a signal strength threshold for the operation to be performed by the household device, and compare the signal strength of the feedback information against the signal strength threshold for the operation to be performed. If the signal strength of the feedback information is greater than or equal to the signal strength threshold for the operation to be performed, then it indicates that the user is relatively close to the household device which thus will perform the corresponding operation mode; if the signal strength of the feedback information is smaller than the signal strength threshold for the operation to be performed, namely, the user is relatively far away from the household device, then the household device won't perform any operations.

In particular, when the user is far beyond the interaction signal coverage area of the household device, then the household device will perform a "close" operation or maintain its original operation mode. For example, when the user enters the room and nears a light switch, then the lights in the room may be automatically turned on; and, when the user leaves the room, they may be automatically turned off.

Differing from the prior art, the second embodiment and the preferred embodiment of the present disclosure identify the mobile terminal and set signal strength thresholds for the operations to be performed by the household devices, thus achieving a humane home management mode. Furthermore, "cushioning effect" may be effectuated. Namely, when the user is relatively far away from the household device which may be still interacting with the mobile terminal, if the signal strength of the feedback information doesn't reach the signal strength threshold for the operation to be performed, then the household device will still not change its operation mode, so as to avoid some inadvertent manipulations and thus maintain the service life of the household device.

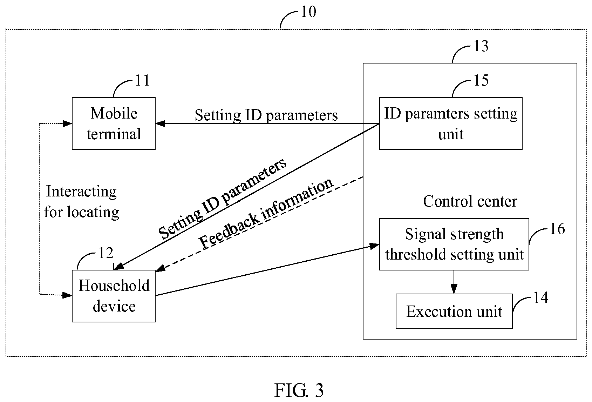

Based on description stated above, referring now to FIG. 3, a system 10 for managing household devices is provided by the present disclosure, the system comprising a mobile terminal 11, multiple household devices 12 and a control center 13.

The household devices 12 are configured to locate the current position coordinates of the mobile terminal 11, compute their respective distances to the mobile terminal using the current position coordinates of the mobile terminal 11 to obtain multiple pieces of distance information, and transmit the distance information to the control center 13. Since the mobile terminal 11 is carried on the user, the household devices 12 also indirectly spot the position where the user is located.

The control center 13 may transmit feedback information to the household devices 12 based on the distance information.

The control center 13 may further comprise an execution unit 14 configured to, after the household device 12 receives the feedback information, control the household device 12 to perform operations of turning on, turning off, or regulating.

The control center 13 may further comprise an ID parameters setting unit 15, being configured to, before the step of locating the current location coordinates of the mobile terminal 11, set ID parameters for the mobile terminal 11 and the household devices 12. The household devices 12 identify the mobile terminal 11 via the ID parameters and thus locate the mobile terminal 11.

The control center 13 may further comprise a signal strength threshold setting unit 16, being configured to, before the household device 12 receives the feedback information and thus performs the operations of turning on, turning off, or regulating, set a signal strength threshold for the operation to be performed.

Preferably, in the above embodiment according to the present disclosure, the mobile terminal 11 and the household devices 12 may interact via a Bluetooth beacon.

The Bluetooth beacon mentioned above adopts Bluetooth Low Energy (also referred to as Bluetooth 4.0 or Bluetooth Smart) technology with transmission distance up to 50 meters, which is sufficient for covering a room or a fixed space within the residence. It is worth mentioning that the transmission distance of NFC or infra-red is very limited, and the user has to hold the infra-red or NFC chips to be directly faced with each other, making manipulations inconvenient. In addition, Bluetooth is extensively applied on various electronic devices, therefore, related operations are even more convenient and no other auxiliary work would be needed.

## Claims

1. A method for managing household devices using a mobile terminal comprising:
locating (S110) by the household devices (12) current position coordinates of the mobile terminal (11) with wireless gateway function;
computing (S120) by the household devices (12) their respective distances to the mobile terminal (11) using the current position coordinates of the mobile terminal (11) to acquire a plurality of pieces of distance information, and transmitting the plurality of pieces of distance information to a control center (13);
selecting (S130) by the control center (13) the smallest distance based on the plurality of pieces of distance information, and transmitting feedback information to the household device (12) at the smallest distance;
receiving by the household device (12) at the smallest distance the feedback information;
**characterized by**:
setting (S150) a signal strength threshold for an operation to be performed by the household device (12);
comparing (S160) a signal strength of the feedback information against the signal strength threshold for the operation to be performed;
when the signal strength of the feedback information is greater than or equal to the signal strength threshold for the operation to be performed, performing by the house hold device (12) one of the operations of turning on, turning off or regulating.

2. The method according to claim 1, further comprising, before the locating by the household devices (12) the current position coordinates of the mobile terminal (11):
setting (S100) ID parameters for the mobile terminal (11) and the household devices (12), the ID parameters being configured to identify interaction signals between the mobile terminal (11) and the household devices (12).

3. The method according to claim 2, further comprising, before the locating by the household devices (12) the current position coordinates of the mobile terminal (11):
interacting (S101) by the mobile terminal (11) with the household devices (12) via the interaction signals;
identifying (SI02) by the household devices (12) the interaction signals via the ID parameters;
when the identification passes, the current position coordinates of the mobile terminal (11) are successfully located;
when the identification fails, the current position coordinates of the mobile terminal (11) are not located.

4. The method according to claim 3, wherein the computing by the household devices (12) their respective distances to the mobile terminal (11) using the current position coordinates of the mobile terminal (11) comprises:
computing the distances by determining strength of the interaction signals;
the stronger the interaction signal is, the closer the corresponding household device (12) and the mobile terminal (11) are;
the weaker the interaction signal is, the farther the corresponding household device (12) and the mobile terminal (11) are.

## Patentansprüche

1. Verfahren zum Verwaltung von Haushaltsvorrichtungen unter der Benutzung eines mobilen Endgeräts, umfassend:
Orten (S110) durch die Haushaltsvorrichtungen (12) von aktuellen Lagekoordinaten des mobilen Endgeräts (11) über eine Funkgatewayfunktion;
Berechnen (S120) durch die Haushaltsvorrichtungen (12) ihrer jeweiligen Abstände zum mobilen Endgerät (11), indem die aktuellen Lagekoordinaten des mobilen Endgeräts (11) benutzt werden, um eine Vielfalt von Abstandsinformationen zu erfassen, und Übertragen der Vielfalt von Abstandsinformationen auf das Steuerzentrum (13);
Auswählen (S130) durch das Steuerzentrum (13) des kleinsten Abstands, der auf die Vielfalt von Abstandsinformationen basiert ist, und Übertragen von Rückmeldungen auf die Haushaltsvorrichtung (12) am kleinsten Abstand;
**gekennzeichnet durch**:
Einstellen (S150) einer Signalstärkeschwelle zur Durchführung eines Betriebes durch die Haushaltsvorrichtung (12);
Vergleichen (S160) einer Signalstärke der Rückmeldungen mit der Signalstärkeschwelle zur Durchführung des Betriebes;
wenn die Signalstärke der Rückmeldungen größer als oder gleich der Signalstärkeschwelle zur Durchführung des Betriebes ist, Durchführen durch die Haushaltsvorrichtung (12) eines der Betriebe aus Einschalten, Ausschalten oder Regeln.

2. Verfahren nach Anspruch 1, weiter umfassend, bevor die Haushaltsvorrichtungen die aktuellen Lagekoordinaten des mobilen Endgeräts (11) orten :
Einstellen (S100) von ID-Parametern für das mobile Endgerät (11) und die Haushaltsvorrichtungen (12), wobei die ID-Parameter zur Identifizierung von Wechselwirkungssignalen zwischen dem mobilen Endgerät und den Haushaltsvorrichtungen (12) konfiguriert werden.

3. Verfahren nach Anspruch 2, weiter umfassend, bevor die Haushaltsvorrichtungen (12) die aktuellen Lagekoordinaten des mobilen Endgeräts (11) orten :
Interaktion (S101) durch das mobile Endgerät (11) mit den Haushaltsvorrichtungen (12) über die Wechselwirkungssignale;
Identifizieren (S102) durch die Haushaltsvorrichtungen (12) der Wechselwirkungssignalen über die ID-Parameter;
wobei, wenn die Identifizierung erfolgreich ist, die aktuellen Lagekoordinaten des mobilen Endgeräts (11) erfolgreich geortet werden;
wenn die Identifizierung scheitert, die aktuellen Lagekoordinaten des mobilen Endgeräts (11) nicht geortet werden.

4. Verfahren nach Anspruch 3, wobei das Berechnen durch die Haushaltsvorrichtungen (12) ihrer jeweiligen Abstände zum mobilen Endgerät (11), indem die aktuellen Lagekoordinaten des mobilen Endgeräts (11) benutzt werden, umfasst:
Berechnen der Abstände, indem die Stärke der Wechselwirkungssignale bestimmt wird;
wobei, je stärker das Wechselwirkungssignal ist, desto näher sind die entsprechende Haushaltvorrichtung (12) und das mobile Endgerät (11);
je schwächer das Wechselwirkungssignal ist, desto weiter entfernt sind die entsprechende Haushaltvorrichtung (12) und das mobile Endgerät (11).

## Revendications

1. Procédé de gestion de dispositifs ménagers utilisant un terminal mobile et comprenant les étapes de :
localisation (S110), par les dispositifs ménagers (12), de coordonnées de position courantes du terminal mobile (11) présentant une fonction passerelle sans fil ;
calcul (S120), par les dispositifs ménagers (12), de leurs distances respectives par rapport au terminal mobile (11) en utilisant les coordonnées de position courantes du terminal mobile (11) afin d'acquérir une pluralité d'informations de distance, et transmission de la pluralité d'informations de distance à un centre de commande (13);
sélection (S130), par le centre de commande (13), de la plus petite distance basée sur la pluralité d'informations de distance, et transmission des informations en retour au dispositif ménager (12) à la plus petite distance;
réception, par le dispositif ménager (12) à la plus petite distance, des informations en retour:
**caractérisé en ce que**:
un seuil de force de signal est réglé (S150) pour un fonctionnement du dispositif ménager (12) à réaliser;
une force de signal des informations en retour est comparée (S160) au seuil de force de signal pour le fonctionnement à réaliser;
lorsque la force du signal des informations en retour est supérieure ou égale au seuil de force de signal pour le fonctionnement à réaliser, le dispositif ménager (12) réalise l'un des fonctionnements parmi la mise en marche, l'arrêt ou la régulation.

2. Procédé selon la revendication 1, comprenant en outre, en amont de la localisation (S110), par les dispositifs ménagers (12), de coordonnées de position courantes du terminal mobile (11, l'étape de :
réglage (S100) de paramètres d'identité pour le terminal mobile (11) et les dispositifs ménagers (12), les paramètres d'identité étant configurés pour identifier les signaux d'interaction entre le terminal mobile (11) et les dispositifs ménagers (12).

3. Procédé selon la revendication 2, comprenant en outre, en amont de la localisation (S110) par les dispositifs ménagers (12) de coordonnées de position courantes du terminal mobile (11, les étapes de:
interaction (S101) par le terminal mobile avec les dispositifs ménagers (12) par l'intermédiaire des signaux d'interactions;
identification (S102) par les dispositifs ménagers (12) des signaux d'interaction par l'intermédiaire des paramètres d'identité;
lorsque l'identification réussit, les coordonnées de position courantes du terminal mobile (11) sont localisées avec succès;
lorsque l'identification échoue, les coordonnées de position courantes du terminal mobile (11) ne sont pas localisées.

4. Procédé selon la revendication 3, dans lequel le calcul (S120), par les dispositifs ménagers (12), de leurs distances respectives par rapport au terminal mobile (11) en utilisant les coordonnées de position courantes du terminal mobile (11) comprend:
le calcul des distances en déterminant la force des signaux d'interaction;
au plus fort est le signal d'interaction, au plus proches sont le dispositif ménager correspondant (12) et le terminal mobile (11);
au plus faible est le signal d'interaction, au plus éloignés sont le dispositif ménager correspondant (12) et le terminal mobile (11).
